# EUROPÄISCHE PATENTSCHRIFT

(11) **EP 0 477 469 B1**
(45) Veröffentlichungstag und Bekanntmachung des Hinweises auf die Patenterteilung: **27.04.1994**
(21) Anmeldenummer: 91109419.1
(22) Anmeldetag: 08.06.1991
(51) Int. Cl.: B21D 53/40, B21D 35/00, F16G 3/04

(54) **Verfahren für die Fertigung von Vorrichtungen zur Verbindung von Transport- oder gleichartigen Bändern, und nach diesem Verfahren hergestellte Verbindungsvorrichtungen**
Method to produce a device to connect belt or similar conveyors and the connecting device produced thereby
Procédé de fabrication de dispositifs de jonction pour tapis transporteurs ou similaires et dispositifs de jonction ainsi fabriqués

(30) Priorität: 10.09.1990 FR 9011171
(43) Veröffentlichungstag der Anmeldung: 01.04.1992
(73) Patentinhaber: GORO S.A., F-77500 Chelles (FR)
(72) Erfinder: Schick, Jean-Francois, F-75016 Paris (FR)
(74) Vertreter: Honke, Manfred, Dr.-Ing.

(56) Entgegenhaltungen:
- FR-A- 2 342 432
- US-A- 3 514 941
- US-A- 4 942 645

## Beschreibung

Die Erfindung betrifft ein Verfahren zum Herstellen von Riemenverbindern aus scharnierartig ineinandergreifenden U-förmigen Metallklammern für die Verbindung von Transportbandenden, wonach aus dem Mittelteil eines Metallbandes in vorgegebenen Abständen unter Bildung von Scharniergelenkteilen Durchbrechungen erzeugt werden und das Metallband derart in U-Form gebogen wird, daß sich die Durchbrechungen und Scharniergelenkteile im Bereich der U-Basis befinden (FR-A-2 342 432).

Man kennt Verbindungsvorrichtungen, die aus einer Reihe aneinander befestigter, im wesentlichen U-förmiger Metallklammern derart bestehen, daß diese beiderseits auf einem der Ränder eines Transport- oder gleichartigen Bandes befestigt werden können, wobei diese Klammern in ihrem gekrümmten Teil eine Reihe von in regelmäßigen Abständen angeordneten, Scharniergelenkteile trennenden Öffnungen aufweisen. Infolgedessen ist es möglich, die beiden Enden eines Transportbandes durch Befestigung einer solchen Vorrichtung an beiden Enden zu verbinden, und sie dann mit den Scharniergelenkteilen dieser Vorrichtungen zu überlappen, um sie mittels eines Gelenkbolzens zusammenzufügen.

Die Klammern dieses Typs werden im allgemeinen durch Schneiden und Tiefziehen eines Metallbandes hergestellt. Jedoch sind die zwischen den Scharniergelenkteilen vorgesehen Öffnungen insofern unzweckmäßig, als sie den mechanischen Widerstand der Klammern gerade an einer Stelle, an der sie starken Kräften ausgesetzt sind, verringern. Außerdem verschleißen an dieser Stelle auch die Scharniergelenkteile wegen ihrer Reibung am Gelenkbolzen, der im allgemeinen aus sehr widerstandsfähigem Metall besteht.

Um dieses Nachteil zu vermeiden, ist schon vorgeschlagen worden, solche Verbindungsklammern aus einem Bandmaterial mit Spezialprofil, dessen Querschnitt an der Stelle, an der die Scharniergelenkteile ausgeführt sind, bedeutend größer ist, herzustellen. Das aber führt zu einer erheblichen Erhöhung der Gestehungskosten, weil ein Bandmaterial mit unterschiedlicher Dicke und Spezialprofil hergestellt werden muß.

Nach dem französischen Patent 2 342 432 ist auch vorgesehen, den gekrümmten Teil jeder Klammer, der dafür bestimmint ist, als Scharniergelenkteil zu funktionieren, selbst abzukanten, wobei die beiden Schenkel der gebildeten Falte deutlich senkrecht zur Hauptebene der beiden Befestigungsschlaufen gegeneinander angelegt werden. Tatsächlich kann so der mechanische Widerstand der Scharniergelenkteile erheblich verstärkt werden, wobei durch die Entkupplung eines jeden derselben auf beiden Seiten der für die Einpassung der Scharniergelenkteile der Klammern der anderen Reihe erforderliche Raum geschaffen wird.

Der Erfindung liegt die Aufgabe zugrunde, ein Verfahren zum Herstellen von Riemenverbindern aus scharnierartig ineinander greifenden U-förmigen Metallklammern für die Verbindung von Transportbandenden der eingangs beschriebenen Ausführungsform zu schaffen, wonach die Verstärkung der Scharniergelenkteile der Klammern für Verbindungsvorrichtungen des in Rede stehenden Typs verbessert wird.

Zur Lösung dieser Aufgabe lehrt die Erfindung bei einem gattungsgemäßen Verfahren, daß zunächst zwischen den späteren Scharniergelenkteilen jeweils ein Loch mit einem kleineren Lochquerschnitt als der endgültige Durchbrechungsquerschnitt in der Mitte der späteren Durchbrechungen erzeugt wird, daß die Löcher durch Eindrücken der Lochränder unter Bildung eines die jeweilige Durchbrechung einfassenden und vorkragenden Bundes auf Durchbrechungsquerschnitt erweitert werden, daß die Bunde auf die entsprechende Fläche des Metallbandes umgebogen und dadurch die Ränder der Durchbrechungen durch einen umlaufenden Rahmen verstärkt werden, und daß das Metallband zur Bildung der U-Form umgebogen wird, daß die Fläche des Metallbandes, gegen welche die vorkragenden Bunde umgebogen worden sind, derart nach innen gerichtet ist, daß die Innenflächen der Scharniergelenkteile durch die Seite an Seite angeordneten Metallstreifen des Rahmens verstärkt werden.

Vorzugsweise erfolgen verschiedene Tiefzieh- und Drückarbeitsgänge vor der U-förmigen Umbiegung des Metallbandes in der Weise, daß das Metallband zwischen zwei Reihen sich ergänzender, untereinander angeordneter Werkzeuge schrittweise vorgeschoben wird, wobei der obere Teil der Werkzeuge aus verschiedenen Tiefziehstempeln oder dergleichen Werkzeugen und der untere Teil aus einer Reihe von Ambossen besteht, und wobei die Ambosse entsprechende Vertiefungen sowie Einformungen zur Sicherstellung der Umbiegung der um die Durchbrechungen des Metallbandes vorkragenden Bunde aufweisen.

Gegenstand der Erfindung ist auch eine Vorrichtung für die Verbindung der Enden eines Transportbandes des Typs, der aus einer Reihe scharnierartig ineinander greifender U-förmiger Metallklammern besteht, die in ihrem gekrümmten Teil eine Reihe von in regelmäßigen Abständen angeordneten Durchbrechungen aufweisen, welche die Scharniergelenkteile trennen. Diese Vorrichtung ist dadurch gekennzeichnet, daß die scharnierartig ineinander greifenden U-förmigen Metallklammern durch Anwendung des Verfahrens nach den Ansprüchen 1 oder 2 hergestellt worden sind, wobei die die jeweilige Durchbrechung einfassenden und vorkragenden Bunde auf die Innenfläche des Metallbandes umgebogen worden sind und auf diese Weise die Ränder der Durchbrechungen durch einen umlaufenden Rahmen und die Innenflächen der Scharniergelenkteile durch die Seite an Seite angeordneten Metallstreifen des Rahmens verstärkt sind.

Im folgenden wird die Erfindung anhand einer lediglich ein Ausführungsbeispiel darstellenden Zeichnung näher erläutert; es zeigen:
- Fig. 1: eine Perspektivansicht einer in der Fertigung befindlichen Verbindungsvorrichtung.
- Fig. 2: ein Schnittaufriß der ergänzenden in dieser Fertigung verwendeten Schnitt- und Ziehwerkzeuge.

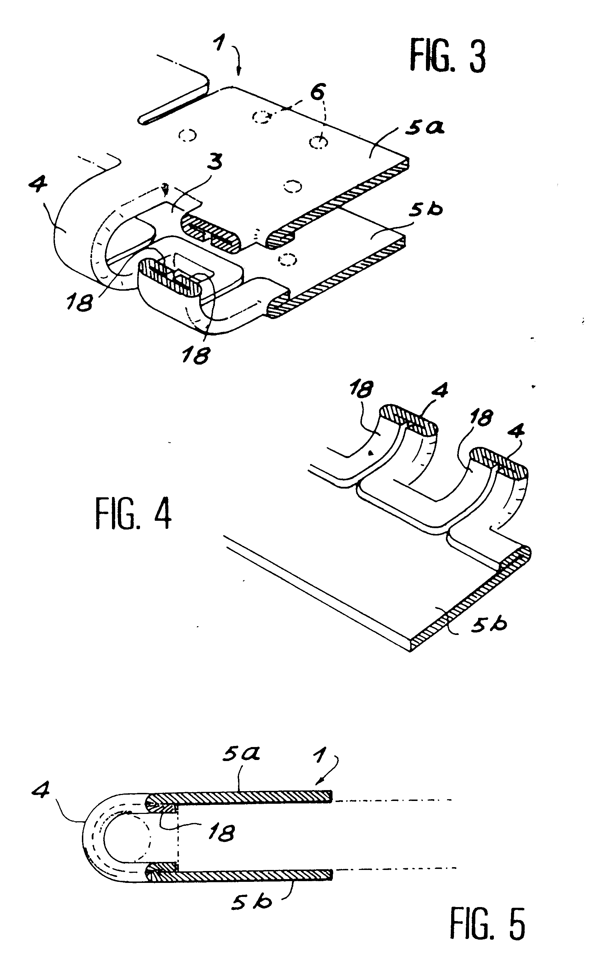

- Fig. 3: eine ausgezogene Perspektivansicht einer fertiggestellten Klammer einer solchen Verbindungsvorrichtung.
- Fig. 4: eine Teilansicht der Innenfläche eines der Schenkel einer solchen Klammer nach ihrem Schnitt an der Stelle der Scharniergelenkteile in der Perspektive.
- Fig. 5: ein Aufriß des Kopf- und Endstücks derselben Klammer.

Wie schon erwähnt, betrifft das Verfahren nach der Erfindung die Fertigung von Verbindungsvorrichtungen, die jeweils aus einer Reihe im wesentlichen U-förmiger Klammern (1) bestehen, und durch eine Abfolge von Schneid- und Tiefziehvorgängen an einem Metallband (2) hergestellt werden. Diese Klammern haben in ihrem gekrümmten Teil eine Reihe von Öffnungen (3), die Scharniergelenkteile (4) trennen, die dafür bestimmt sind, mit den entsprechenden Scharniergelenkteilen einer anderen gleichartigen Reihe von Klammern zu überlappen. Überdies enthalten die beiden übereinanderliegenden Schenkel (5a und 5b) jeder Klammer Löcher (6) für die spätere Durchführung von Nieten oder Befestigungsklemmen, die für die sichere Befestigung dieser Klammern an einem der Endstücke eines Transportbandes verwendet werden.

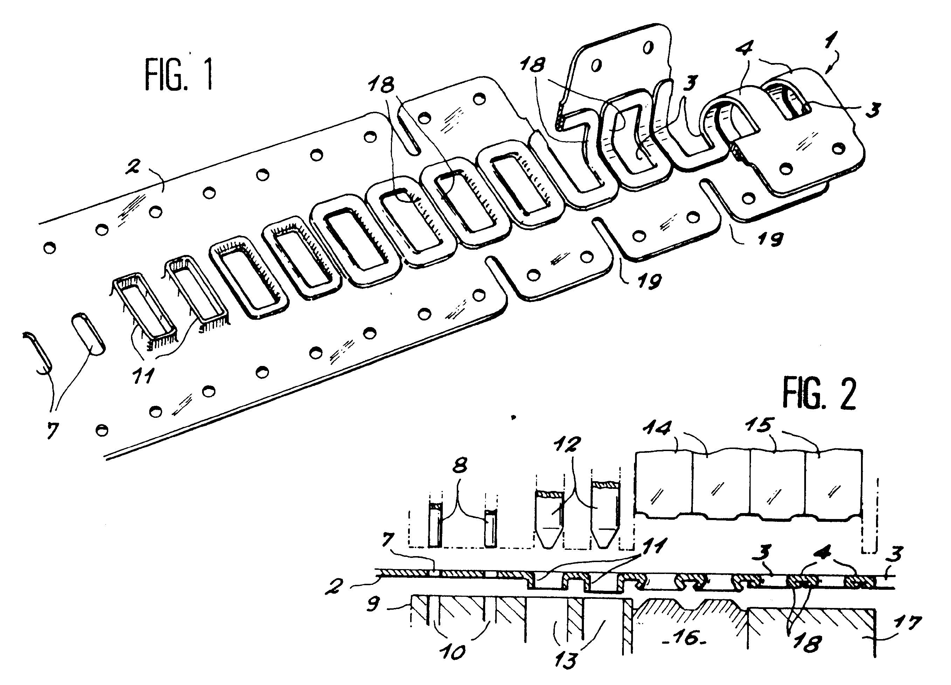

In Übereinstimmung mit dem Verfahren nach der Erfindung besteht der erste Fertigungsvorgang aus der Formung eines Lochs (7) mit kleinem Querschnitt in der Mitte der für jede Öffnung (3) vorgesehenen Stelle, also im Mittelteil des Bandes (2). Indessen werden - siehe das in den Figuren 1 und 2 dargestellte Beispiel - auf diese Weise gleichzeitig zwei Löcher (7) mit zwei gegenüber einem feststehenden, entsprechende Kanäle (10) enthaltenden Amboß (9) angeordneten Stanzstempeln (8) eingeformt worden.

Nach diesem ersten Arbeitsgang werden die Ränder der beiden auf diese Weise entstandenen Löcher (7) nach innen so angestaucht, daß eine Art Bund (11) um jedes dieser Löcher gebildet wird. Dieser Arbeitsgang wird gleichzeitig für zwei Löcher (7) mittels zwei gegenüber den beiden im Amboß (9) vorgesehenen Vertiefungen (13) angeordneten Drückdornen (12) ausgeführt. Nach Abschluß dieses Arbeitsgangs kragen die so geformten Bunde (11) über die Fläche des zum Amboß (9) gedrehten Bandes (2) aus.

Die beiden soeben beschriebenen sowie die folgenden Arbeitsgänge erfolgen beim schrittweisen Vorschub des Bandes (2) zwischen dem Amboß (9) und den Dornen oder anderen für die Bearbeitung des Bandes vorgesehenen Werkzeugen.

Nach Eindrücken der Bunde (11) werden die Ränder derselben gegen die Fläche des gegenüber dem Amboß (9) befindlichen Bandes (2) umgebogen. Dieser Arbeitsgang erfolgt durch Durchführung der entsprechenden Teile des Bandes (2) zwischen zwei Paar Ergänzungsziehwerkzeugen, die am oberen bzw. am unteren Teil angeordnet sind. Die beiden oberen Werkzeuge (14 und 15) stellen Ziehformen dar. Was die unteren Werkzeuge (16 und 17) anbelangt, so stellen diese zusätzliche Ambosse dar, die Ambosse (16) enthalten Eindrückungen für die Einleitung der Umbiegung der Seiten der Bunde (11), während der Amboß (17) für die Vollendung dieses Arbeitsgangs bestimmt ist.

Nach Abschluß dieses letzten Arbeitsgangs ist die Innenfläche eines jeden Scharniergelenkteils (4) durch zwei Seite an Seite angeordnete Metallbänder (18) verstärkt, diese entsprechen den angrenzenden umgebogenen Seiten der vorher an der Stelle der beiden Öffnungen (3), die das betreffende Scharniergelenkteil (4) einfassen, geformten Bunde (11) (siehe Zeichnungen). Die zur Innenfläche jedes Scharniergelenkteils (4) umgebogenen Metallbänder (18) stoßen vorzugsweise fast aneinander. Indessen können sie eventuell einen Zwischenraum zwischen ihnen enthalten.

Nachdem schließlich die Kerben (19) zur Trennung der verschiedenen Klammern (1) nacheinander eingeformt worden sind, wird das Band (2) um sich selbst U-förmig gewölbt und gebogen, um diesen Klammern ihre endgültige Form zu geben. Selbstverständlich können Anzahl und Form der Klammern sowie die Anzahl ihrer Scharniergelenkteile variieren.

Die durch Anwendung dieses Verfahrens hergestellten Klammern haben den Vorteil, daß die Innenfläche eines jeden ihrer Scharniergelenkteile (14) durch zwei deutlich gleich dicke Metallbänder, die andernfalls verloren gewesen wären, da sie von einem Metallteil an der Stelle der zwischen zwei Scharniergelenkteilen befindlichen Ausstanzungen (3) geformt worden sind, verstärkt worden ist. Auf diese Weise erzielt man eine bedeutende Verstärkung des mechanischen Widerstands der Scharniergelenkteile, womit diese weniger Verschleiß und Abnutzung, insbesondere infolge ihrer späteren Reibung am Gelenkbolzen, der die Verbindung der beiden einander ergänzenden Verbindungsvorrichtungen sicherstellt, ausgesetzt sind.

Auf Grund des Fertigungsverfahrens nach der Erfindung ist es möglich, als Ausgangsmaterial ein viel dünneres Metallband als bei den derzeitigen Verfahren zu verwenden, weil die Scharniergelenkteile durch Umbiegung des Metalls unter ihnen verstärkt werden. Weil außerdem die Auswahl der Breite der Scharnierteile nicht mehr an die Dicke des verwendeten Metalls gebunden ist, kann der Widerstand der Scharniergelenkteile, im Gegensatz zu ihrem Verschleiß durch Reibung am Verbindungsbolzen, optimiert werden. Darüberhinaus hat die Verminderung der Metalldicke einen anderen indirekten Vorteil und zwar deshalb, weil die dadurch dünneren Schenkel der Klammern ihre Durchführung unter die über den Transportbändern angeordneten Abstreicher erleichtert.

Die Klammern werden auch als Riemenverbinder bezeichnet.

## Patentansprüche

1. Verfahren zum Herstellen von Riemenverbindern aus scharnierartig ineinandergreifenden U-förmigen Metallklammern (1) für die Verbindung von Transportbandenden, wonach aus dem Mittelteil eines Matallbandes (2) in vorgegebenen Abständen unter Bildung von Scharniergelenkteilen (4) Durchbrechungen (3) erzeugt werden und das Metallband (2) derart in U-Form gebogen wird, daß sich die Durchbrechungen (3) und Scharniergelenkteile (4) im Bereich der U-Basis befinden, **dadurch gekennzeichnet,** daß zunächst zwischen den späteren Scharniergelenkteilen (4) jeweils ein Loch (7) mit einem kleineren Lochquerschnitt als der endgültige Durchbrechungsquerschnitt in der Mitte der späteren Durchbrechungen (3) erzeugt wird, daß die Löcher (7) durch Eindrücken der Lochränder unter Bildung eines die jeweilige Durchbrechung (3) einfassenden und vorkragenden Bundes (11) auf Durchbrechungsquerschnitt erweitert werden, daß die Bunde (11) auf die entsprechende Fläche des Metallbandes (2) umgebogen und dadurch die Ränder der Durchbrechungen (3) durch einen umlaufenden Rahmen (18) verstärkt werden, und daß das Metallband (2) zur Bildung der U-Form derart umgebogen wird, daß die Fläche des Metallbandes (2), gegen welche die vorkragenden Bunde (11) umgebogen worden sind, derart nach innen gerichtet ist, daß die Innenflächen der Scharniergelenkteile (4) durch die Seite an Seite angeordneten Metallstreifen des Rahmens (18) verstärkt werden.

2. Verfahren nach Anspruch 1, dadurch gekennzeichnet, daß verschiedene Metalltiefzieh- und -drückarbeitsgänge vor der U-förmigen Umbiegung des Metallbandes (2) in der Weise erfolgen, daß das Metallband (2) zwischen zwei Reihen sich ergänzender, untereinander angeordneter Werkzeuge schrittweise vorgeschoben wird, wobei der obere Teil der Werkzeuge aus verschiedenen Tiefziehstempeln (8, 12, 14, 15) od. dgl. Werkzeugen und der untere Teil aus einer Reihe von Ambossen (9, 16, 17) besteht, und wobei die Ambosse entsprechende Vertiefungen (10, 13) sowie Einformungen zur Sicherstellung der Umbiegung der um die Durchbrechungen (3) des Metallbandes (2) vorkragenden Bunde (11) aufweisen.

3. Vorrichtung für die Verbindung der Enden eines Transportbandes des Types, der aus einer Reihe scharnierartig ineinandergreifender U-förmiger Metallklammern (1) besteht, die in ihrem gekrümmten Teil eine Reihe von in regelmäßigen Abständen angeordneten Durchbrechungen (3) aufweisen, welche die Scharniergelenkteile (4) trennen, dadurch gekennzeichnet, daß die scharnierartig ineinandergreifenden U-förmigen Metallklammern (1) durch Anwendung des Verfahrens nach den Ansprüchen 1 oder 2 hergestellt worden sind, wobei die die jeweilige Durchbrechung (3) einfassenden und vorkragenden Bunde (11) auf die Innenfläche des Metallbandes (2) umgebogen worden sind und auf diese Weise die Ränder der Durchbrechungen (3) durch einen umlaufenden Rahmen (18) und die Innenflächen der Scharniergelenkteile (4) durch die Seite an Seite angeordenten Metallstreifen des Rahmens (18) verstärkt sind.

## Claims

1. A method of manufacturing belt connectors comprising hinge-like U-shaped metal clips (1) engaging within one another for connecting the ends of conveyor belts, wherein openings (3) are produced at predetermined spacings from the central part of a metal strip (2) with the formation of hinge joint parts (4), and the metal strip (2) is bent into a U-shape in such a way that the openings (3) and hinge joint parts (4) are located in the region of the base of the U, characterised in that a hole (7) with a hole cross-section less than the final opening cross-section is first formed in the centre of each of the subsequent openings (3) between the subsequent hinge joint parts (4), that the holes (7) are enlarged to the opening cross-section by pressing in the hole edges with the formation of a projecting collar (11) bordering the respective opening (3), that the collars (11) are bent round on to the corresponding face of the metal strip (2) and by this means the edges of the openings (3) are reinforced by a surrounding frame (18), and that the metal strip (2) for forming the U-shape is bent round in such a way that the face of the metal strip (2) towards which the projecting collars (11) are bent round is oriented inwards so that the inner faces of the hinge joint parts (4) are reinforced by the metal strips of the frame (18), which are disposed side by side.

2. A method according to claim 1, characterised in that various metal deep-drawing and pressing operations are effected before the metal strip (2) is bent into a U-shape, in such a manner that the metal strip (2) is advanced step-wise between two rows of tools of increasing size disposed one underneath another, wherein the upper part of the tools consists of various deep-drawing punches (8, 12, 14, 15) or like tools and the lower part consists of a row of anvils (9, 16, 17), and wherein the anvils have corresponding indentations (10, 13) and shaped portions for ensuring the bending round of the collars (11) projecting around the openings (3) of the metal strip (2).

3. A device for connecting the ends of a conveyor belt of the type which consists of a row of hinge-like U-shaped metal clips (1) engaging within one another, which have a row of openings (3) disposed at regular spacings in their curved part, which openings separate the hinge joint parts (4), characterised in that the hinge-like U-shaped metal clips (1) which engage within one another are manufactured by the application of the method according to claims 1 or 2, wherein the projecting collars (11) bordering the respective opening (3) are bent round on to the inner face of the metal strip (2) and in this manner the edges of the openings (3) are reinforced by a surrounding frame (18) and the inner faces of the hinge joint parts (4) are reinforced by the metal strips of the frame (18) disposed side by side.

## Revendications

1. Procédé de fabrication de raccords de courroies constitués par des agrafes métalliques (1) en forme de U s'engageant les unes dans les autres à la manière des éléments d'une charnière pour la jonction de courroies transporteuses, dans lequel des ouvertures (3) sont produites dans la partie médiane d'une bande de métal (2) à des espacements prédéterminés en formant des éléments d'articulation à charnière (4), et la bande de métal (2) est pliée en U de telle manière que les ouvertures (3) et les éléments d'articulation à charnière (4) se trouvent dans la région de la base du U,
**caractérisé** en ce qu'on produit en premier lieu, entre les futurs éléments d'articulation à charnière (4), chaque fois un trou (7) ayant une section de trou plus petite que celle de l'ouverture finale, au milieu des futures ouvertures (3), en ce qu'on élargit ces trous (7) jusqu'à la section de l'ouverture par enfoncement des bords des trous en formant un collet (11) bordant l'ouverture respective en étant saillant, en ce qu'on rabat les collets (11) sur la surface correspondante de la bande de métal (2) en renforçant par ce moyen les bords des ouvertures (3) par un cadre (18) les entourant, et en ce qu'on plie la bande métallique (2) pour lui donner une forme en U en dirigeant vers l'intérieur la face de la bande métallique (2) sur laquelle les collets saillants (11) auront été rabattus, de telle sorte que les faces intérieures des éléments d'articulation à charnière (4) soient renforcées par les bandes de métal du cadre (18) disposées côte à côte.

2. Procédé selon la revendication 1, caractérisé en ce que diverses opérations d'emboutissage profond du métal et de repoussage du métal ont lieu avant le pliage en U de la bande de métal (2), de telle manière que la bande de métal (2) avance pas-à-pas entre deux rangées d'outils complémentaires entre eux, disposés l'un sous l'autre, la rangée supérieure d'outils étant constituée par divers poinçons d'emboutissage profond (8, 12, 14, 15) ou autres outils similaires et la rangée inférieure étant constituée d'une série d'enclumes (9, 16, 17) présentant des renfoncements (10, 13) correspondants ainsi que des formations pour assurer le rabattage des collets saillants (11) sur le pourtour des ouvertures (3) de la bande de métal (2).

3. Dispositif de jonction des extrémités d'une courroie transporteuse, du type se composant d'une rangée d'agrafes (1) en métal, en forme de U s'engageant les unes dans les autres à la manière d'une charnière, présentant dans leur partie courbée une rangée d'ouvertures (3) disposés à espacements réguliers, qui séparent les éléments d'articulation à charnière (4),
**caractérisé** en ce que les agrafes (1) en métal, en forme de U, s'engageant les unes dans les autres à la manière d'une charnière, ont été fabriquées par application du procédé selon les revendications 1 ou 2, les collets saillants (11) entourant respectivement chaque ouverture (3) ayant été rabattus sur la face intérieure de la bande de métal (2) et les bords des ouvertures (3) étant ainsi renforcés par un cadre (18) qui les entoure, et les faces intérieures des éléments d'articulation à charnière (4) étant renforcés par les languettes de métal du cadre (18), disposées côte à côte.
